# FASCICULE DE BREVET EUROPEEN

(11) **EP 4 015 422 B1**
(45) Date de publication et mention de la délivrance du brevet: **19.02.2025**
(21) Numéro de dépôt: 21215002.3
(22) Date de dépôt: 16.12.2021
(51) Int. Cl.: B65G 61/00, B25J 9/16, G01B 11/24

(54) **PROCÉDÉ POUR DÉSEMPILER DES PNEUS EMPILÉS EN RANGÉES INCLINÉES**
VERFAHREN ZUM ENTSTAPELN VON REIFEN, DIE IN GENEIGTEN REIHEN GESTAPELT SIND
METHOD FOR DESTACKING TYRES STACKED IN ANGLED ROWS

(30) Priorité: 17.12.2020 FR 2013482
(43) Date de publication de la demande: 22.06.2022
(73) Titulaire: Boubiela Moret, 02100 Saint Quentin (FR)
(72) Inventeur: RICHET, Sylvain, 02315 SAINT-QUENTIN (FR); NEWLAND, Véronique, 77420 CHAMPS SUR MARNE (FR); LUCIA, Pascal, 77515 POMMEUSE (FR)
(74) Mandataire: Lavoix

(56) Documents cités:
- WO-A1-2014/113511
- WO-A1-2016/032600
- DE-U1- 202020 100 320
- US-A1- 2010 272 547
- AROTEC: "DEPALGO@TIRE Tire Depalletizing Software - Arotec EN", AROTEC-ROBOTIK.DE, 4 December 2020 (2020-12-04), pages 1 - 4, XP055834631, Retrieved from the Internet <URL:https://web.archive.org/web/20201204045756/https://www.arotec-robotik.de/depalgotire-tire-depalletizing-software.html> [retrieved on 20210824]

## Description

La présente invention concerne un procédé pour désempiler un ensemble de pneus empilés sur un support dans une direction de superposition, l'ensemble de pneus comprenant des rangées de pneus superposées dans la direction de superposition et s'étendant dans une direction de rangement sensiblement perpendiculaire à la direction de superposition, les pneus de chacune des rangées étant disposés flanc contre flanc obliquement par rapport à la direction de superposition.

L'invention concerne aussi une installation correspondante.

Par « pneus », on entend ici des pneumatiques.

Un tel empilement de pneus présente l'avantage d'être compact, ce qui permet de minimiser les coûts de stockage et de transport des pneus. Toutefois, les pneus étant penchés les uns sur les autres, la plupart des pneus d'une rangée, même supérieure dans l'empilement, sont inaccessibles, en ce sens qu'on ne peut pas les soulever sans avoir retiré préalablement d'autres pneus.

Actuellement, de tels ensembles sont désempilés au moins en partie à la main, avec une intervention humaine au moins pour déterminer quel pneu doit être saisi en premier, puis quel autre, etc. En effet, les pneus étant des formes noires sur fond noir, les technologies classiques de visualisation ne permettent pas de déterminer avec précision et en temps réel quel pneu est libre et donc à déplacer en premier, ce qui empêche notamment toute automatisation efficace du processus.

Un but de l'invention est donc de fournir un procédé pour désempiler un tel ensemble de pneus qui soit plus rapide et/ou moins coûteux que les procédés actuellement utilisés.

À cet effet, l'invention a pour objet un procédé selon la revendication 1.

Il a été découvert que le recours à au moins un capteur à temps de vol permet de déterminer un pneu libre dans une zone d'intérêt de la ou des image(s) tridimensionnelle(s) prise(s) par le capteur, et de fournir des données de position suffisamment précises à un robot manipulateur.

Suivant des modes particuliers de réalisation, le procédé selon l'invention comprend une ou plusieurs des caractéristiques correspondant aux revendications 2 à 8.

L'invention concerne également une installation selon la revendication 9.

L'invention sera mieux comprise à la lecture de la description qui va suivre, donnée uniquement à titre d'exemple, et faite, en se référant aux dessins annexés, sur parmi lesquels :
- la figure 1 est une représentation en perspective d'une installation selon l'invention,
- la figure 2 est une vue de détail en perspective d'un robot manipulateur de l'installation représentée sur la figure 1,
- la figure 3 est une vue en perspective d'un préhenseur du robot du robot représenté sur les figures 1 et 2, les mâchoires du préhenseur étant dans une position ouverte,
- la figure 4 est une vue en coupe du préhenseur représenté sur les figures 1 à 3, les mâchoires du préhenseur étant dans la position fermée sur un des pneus de l'ensemble,
- la figure 5 est une vue schématique d'une partie de l'installation représentée sur la figure 1, montrant l'ensemble de pneus, leur support et le capteur,
- la figure 6 est une vue simplifiée d'une image bidimensionnelle de deux rangées supérieures d'un ensemble de pneus, obtenue à partir d'une image tridimensionnelle fournie par le capteur représenté sur les figures 1 et 5,
- la figure 7 est une vue simplifiée d'une image traitée obtenue après une analyse de particules appliquée à l'image bidimensionnelle représentée sur la figue 6, et
- la figure 8 est une vue simplifiée d'une des images bidimensionnelles du voisinage du pneu libre utilisée pendant une détermination itérative de l'orientation du pneu libre.

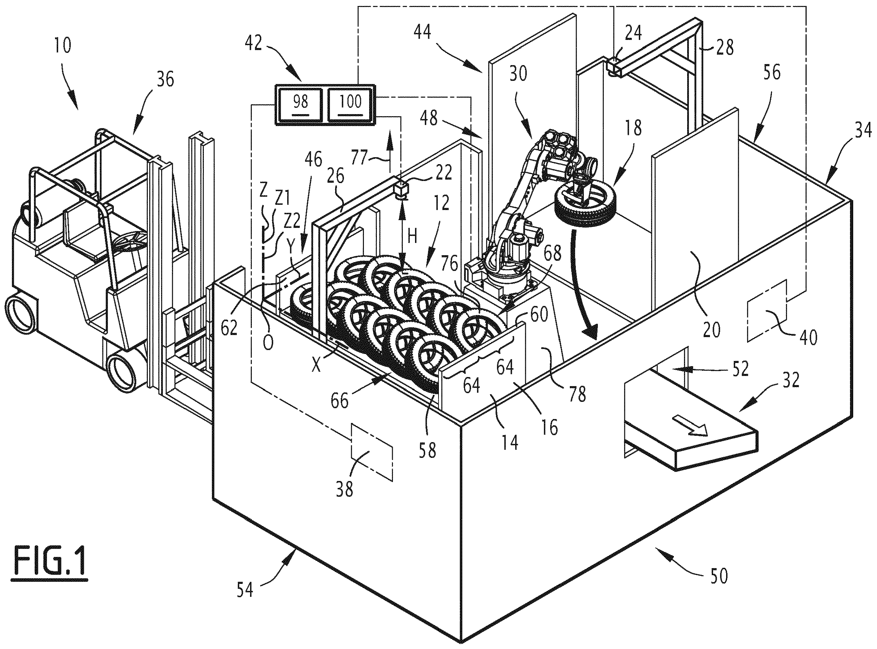

En référence à la figure 1, on décrit une installation 10 selon l'invention.

L'installation 10 est adaptée pour désempiler un ensemble de pneus 12 initialement empilés sur un premier rack 14 (au premier plan) formant un support 16 pour l'ensemble de pneus 12. Dans l'exemple représenté, l'installation 10 est également adaptée pour désempiler des pneus 18 (dont un seul est représenté) sur un deuxième rack 20 (au second plan).

L'installation 10 comprend deux capteurs 22, 24 avantageusement situés au-dessus du premier rack 14 et du deuxième rack 20, et deux structures 26, 28, par exemple en forme de potences, supportant respectivement les deux capteurs. L'installation 10 comprend un robot 30 adapté pour déplacer des pneus depuis le premier rack 14 ou le deuxième rack 20 vers un réceptacle 32, par exemple une bande de convoyage adaptée pour emporter les pneus.

Selon des variantes non représentées, l'installation 10 est configurée pour traiter un seul rack, ou bien plus de deux racks, avec un seul capteur ou plus de deux capteurs.

L'installation 10 comprend avantageusement une enceinte 34 protectrice entourant le premier rack 14, le deuxième rack 20 et le robot 30.

Dans l'exemple, l'installation 10 comprend un engin de manutention 36 pour déplacer successivement le premier rack 14 et le deuxième rack 20 entre une position active (représentée sur la figure 1), dans laquelle le premier rack et le deuxième rack sont respectivement sous les deux capteurs 22, 24, et une position inactive (non représentée), dans laquelle le premier rack 14 et le deuxième rack 20 sont à l'extérieur de l'enceinte 34, par exemple pour être chargés en pneus.

L'installation 10 comprend avantageusement deux systèmes de levage 38, 40, schématiquement représentés sur la figure 1, adaptés pour ajuster la hauteur du premier rack 14 et du deuxième rack 20, comme cela sera expliqué plus bas.

L'installation 10 comprend aussi un système de commande et de traitement 42 (représenté schématiquement sur la figure 1) pour contrôler les deux capteurs 22, 24, le robot 30, les systèmes de levage 38, 40, et pour mettre en œuvre certaines étapes d'un procédé selon l'invention.

En variante non représentée, l'installation 10 n'est pas une installation statique à laquelle est apporté l'ensemble de pneus 12, mais une installation mobile, par exemple adaptée pour décharger des pneus d'une remorque d'un camion, ou plus généralement d'un conteneur (non représenté). Dans ce cas, le robot 30 et le ou les capteurs 22, 24 sont solidaires d'un ou plusieurs support(s) déplaçable(s) par rapport à l'ensemble de pneus. Selon un mode particulier, ces supports sont déplacés au fur et à mesure du déchargement de la remorque.

L'enceinte 34 est par exemple de forme rectangulaire ou carrée. L'enceinte 34 comprend par exemple une première face 44 définissant deux entrées 46, 48 permettant de mettre le premier rack 14 et le deuxième rack 20 dans leurs positions actives. L'enceinte 34 comprend par exemple une deuxième face 50, avantageusement opposée à la première face 44, et définissant une sortie 52 traversée par la bande de convoyage.

Les supports 26, 28 des capteurs sont par exemple fixés au sol.

Le support 16 des pneus 12 comprend par exemple une base 58, et deux faces 60, 62 opposées selon une direction de rangement X des pneus par exemple sensiblement horizontale. Le support 16 autorise un accès aisé aux pneus 12 par le dessus et dans une direction transversale Y sensiblement perpendiculaire à la direction de rangement X et par exemple sensiblement horizontale.

Les pneus 12 sont empilés sur le support dans une direction de superposition Z sensiblement perpendiculaire à la direction de rangement X et la direction transversale Y, par exemple sensiblement verticale.

Selon une variante non représentée, la direction de superposition Z n'est pas sensiblement verticale, notamment si l'ensemble de pneus 12 est en porte-à-faux, ou en appui contre un support quelconque (non représenté).

L'ensemble de pneus 12 comprend des rangées de pneus 64 superposées dans la direction de superposition Z et s'étendant dans la direction de rangement X, les pneus de chacune des rangées étant disposés flanc contre flanc obliquement par rapport à la direction de superposition Z et par rapport à la direction de rangement X. Dans l'exemple, l'ensemble de pneus 12 comporte deux groupes 66, 68 de rangées 64 superposées.

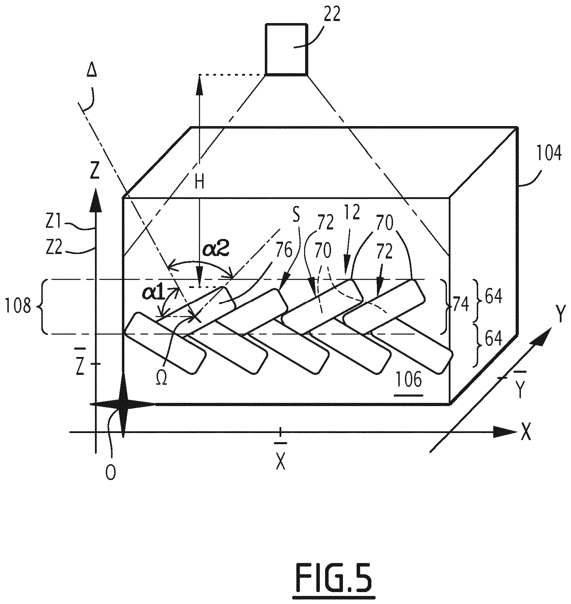

Les groupes 66, 68 sont juxtaposés dans la direction transversale Y. Dans chacun des groupes, les pneus 12 de l'une quelconque des rangées 64 sont inclinés dans un sens par rapport à la direction de superposition Z, et les pneus de la ou des rangée(s) 64 adjacente(s) dans la direction de superposition Z sont inclinés avantageusement en sens contraire. Ainsi, des parties supérieures 70 (figure 5) des pneus 12 pris dans l'une des rangées 64 non situées en haut de l'empilement sont reçues dans des logements centraux 72 des pneus 12 de la rangée 64 située immédiatement au-dessus de cette rangée. Un tel mode d'empilement est dit « en chaînette », et confère une grande compacité à l'empilement.

Selon une variante non représentée, les pneus 12 de la ou des rangée(s) adjacente(s) dans la direction de superposition Z sont inclinés dans le même sens, ou en tous cas pas systématiquement en sens contraire.

D'autres modes d'empilement sont bien évidemment possibles. Quoi qu'il en soit, ce type d'empilement fait que, dans une rangée supérieure 74 (non recouverte par d'autres pneus), un seul des pneus 12 est un pneu libre 76, c'est-à-dire non recouvert, même partiellement, par un autre des pneus 12. Dans l'exemple, il y a deux rangées supérieures. La rangée supérieure 74 est l'une d'entre elles, par exemple celle située le plus en hauteur dans la direction de superposition Z.

Le pneu libre 76 est adapté pour être soulevé par le robot 30 dans la direction de superposition Z par rapport au support 16 sans déplacer ou faire tomber les autres des pneus de l'ensemble de pneus 12.

Les systèmes de levage 38, 40 sont adaptés pour ajuster la distance H entre celui des capteurs 22, 24 situé au-dessus et l'ensemble de pneus 12 dans une direction de seuillage Z1 qui est par exemple la direction de superposition Z.

Les deux capteurs 22, 24 sont avantageusement identiques, aussi seul le capteur 22 sera décrit ci-après.

Le capteur 22 est adapté pour être dirigé vers l'ensemble de pneus 12.

Le capteur 22 est une caméra à temps de vol (en anglais TOF, pour « time of flight ») matricielle, par exemple de résolution 640 x 480 pixels, avec source de lumière intégrée (non représentée).

Le capteur 22 est adapté pour mesurer en temps réel une scène en trois dimensions (3D) et fournir une image tridimensionnelle 77 représentative d'une surface extérieure S (figure 5) d'au moins une partie de l'ensemble de pneus 12 dans un repère local (O, X, Y, Z) lié au support 16.

Le capteur 22 est adapté pour illuminer l'ensemble de pneus 12 par au moins un éclair de lumière, et pour mesurer le temps que cet éclair prend pour effectuer le trajet entre les pneus 12 et le capteur 22. Le temps de vol de cet éclair est directement proportionnel à la distance entre la caméra et la surface extérieure S des pneus 12. Cette mesure de temps de vol est effectuée indépendamment pour chaque pixel de la caméra, ce qui permet d'obtenir une image en 3D de l'objet mesuré. Le principe de mesure est donc très similaire à celui des scanners laser, avec cependant l'avantage de permettre l'acquisition d'une surface dans l'espace, et non d'une seule ligne.

Avantageusement, le capteur 22 est apte à fournir une pluralité d'images tridimensionnelles, et à en fournir une moyenne, afin de diminuer le bruit de la mesure.

En variante, la moyenne est réalisée par le système de commande et de traitement 42.

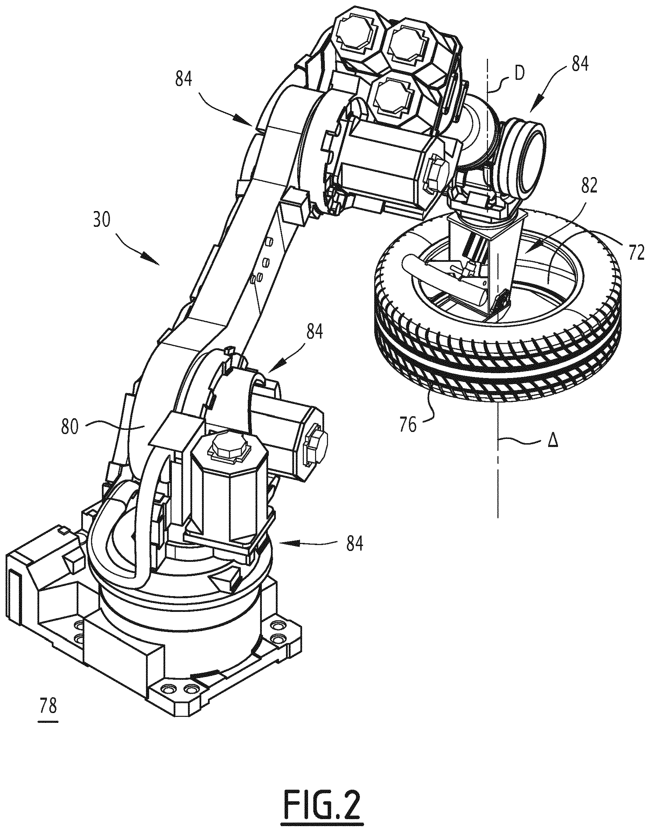

Comme visible sur les figures 1 et 2, le robot 30 comprend un socle 78, un bras articulé 80 fixé sur le socle, et un préhenseur 82 situé à l'extrémité libre du bras articulé.

Selon une variante non représentée, le robot 30 comporte avantageusement plusieurs bras articulés.

Le socle 78 est par exemple situé entre le premier rack 14 et le deuxième rack 20 dans la direction transversale Y.

Le bras articulé 80 comprend plusieurs articulations 84 permettant au robot 30 d'atteindre n'importe lequel des pneus de l'ensemble de pneus 12 lorsque le premier rack 14 est dans sa position active, et d'effectuer des mouvements relatifs pour déplacer ce pneu et le poser sur la bande de convoyage.

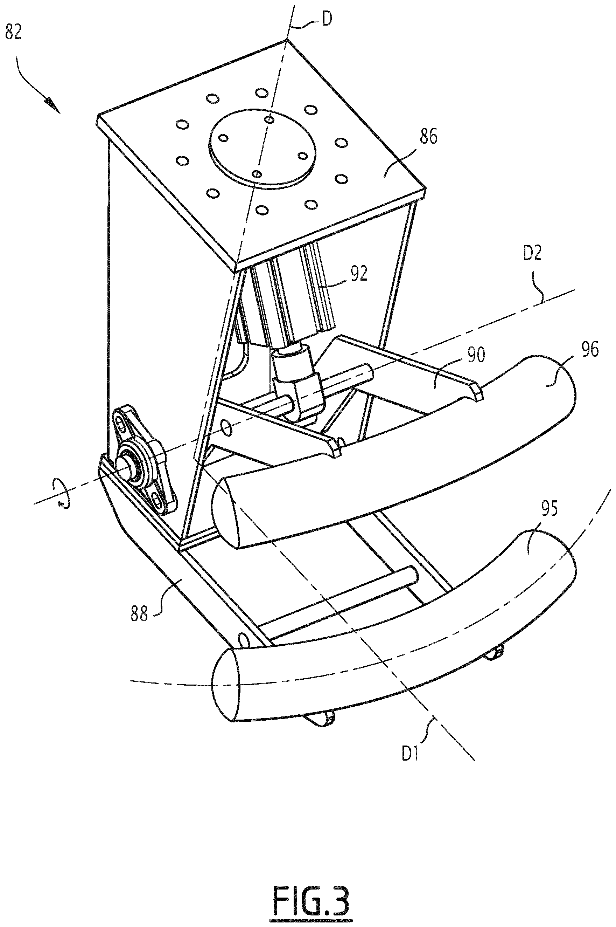

Comme visible sur les figures 3 à 4, le préhenseur 82 comprend par exemple un corps 86 monté sur le bras articulé 80, au moins deux mâchoires 88, 90 montées sur le corps, et un actionneur 92.

Le corps 86 est par exemple monté rotatif sur le bras articulé 80 autour d'un axe de rotation D.

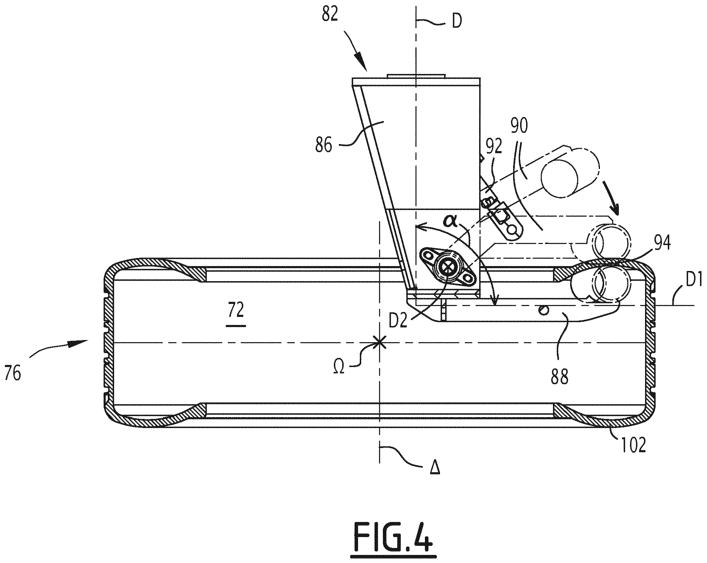

Les deux mâchoires 88, 90 sont mobiles l'une par rapport à l'autre entre une position ouverte (figures 2, 3 et 4), dans laquelle les deux mâchoires sont à l'écart l'une de l'autre, et une position fermée (figure 4), dans laquelle les deux mâchoires sont adaptées pour pincer un flanc 94 du pneu libre 76.

Dans l'exemple, l'une des deux mâchoires 88, 90 est fixe par rapport au corps 86 et fait saille du corps selon un premier axe D1 formant un angle α avec l'axe de rotation D, l'angle α étant avantageusement compris entre 70° et 110°.

L'autre des deux mâchoires 88, 90 est montée rotative sur le corps 86 autour d'un deuxième axe D2 sensiblement orthogonal à l'axe de rotation D.

Chacune des deux mâchoires 88, 90 comprend avantageusement un embout 95, 96 formant une portion angulaire de tore.

L'actionneur 92 est adapté pour agir sur l'autre des deux mâchoires 88, 90.

Selon une variante non représentée, les deux mâchoires 88, 90 sont mobiles par rapport au corps 86.

Le système de commande et de traitement 42 (figure 1) comprend au moins une unité centrale 98 et une mémoire 100. Le système de commande et de traitement 42 est connecté au deux capteurs 22, 24, aux deux systèmes de levage 38, 40 et au robot 30.

L'unité centrale 98 est adaptée pour lire des instructions logicielles dans la mémoire 100, pour identifier le pneu libre 76 et pour fournir des données de position représentatives de la position du pneu libre 76 dans le repère local (O, X, Y, Z).

Les données de position comprennent par exemple trois coordonnées X0, Y0, Z0 d'un centre Ω du pneu libre 76 dans le repère local (O, X, Y, Z), et deux angles α1, α2 représentatifs d'une orientation du pneu libre 76, par exemple par rapport à la direction de rangement X et à la direction transversale Y.

Optionnellement, notamment si les pneus 12 ne présentent pas deux flancs 94, 102 identiques, les données de position comportent un paramètre booléen représentatif de la manière (parmi deux possibilités) dont les flancs 94, 102 sont situés par rapport à la direction de superposition Z. Dit autrement, le paramètre booléen est par exemple représentatif de la face du pneu libre 76 dirigée vers le haut.

On va maintenant décrire le fonctionnement de l'installation 10, qui est adaptée pour mettre en œuvre un procédé selon l'invention.

L'engin de manutention 10 (figure 1) a par exemple apporté le deuxième rack 20 dans la position active dans l'enceinte 34. Pendant que l'installation 10 désempile des pneus 18 présents sur le deuxième rack 20 (dont un seul est représenté sur la figure 1), l'engin de manutention 36 retire un rack vide là où est représenté le premier rack 14 sur la figure 1, et apporte le premier rack 14 chargé de l'ensemble de pneus 12. Puis, l'installation 10 désempile les pneus 12 présents sur le premier rack 14. Ces étapes alternent, de sorte que les opérations de manutention des racks et les étapes qui désempilent les pneus sont réalisées en temps masqué. Dit autrement, dès que le robot 30 a fini de vider un rack, il peut passer à un autre rack sans temps mort lié à la manutention des racks.

Pour désempiler les pneus 12 du premier rack 14 représenté sur la figure 1, l'unité centrale 98 lit, ou a lu, les instructions logicielles dans la mémoire 100, ce qui conduit l'installation 10 à mettre en œuvre un procédé selon l'invention.

Dans une étape a) du procédé, au moins une image tridimensionnelle 77 est obtenue à l'aide du capteur 22 dirigé vers l'ensemble de pneus 12. Puis le système de commande et de traitement 42 réalise une étape b) détermination d'une zone d'intérêt 104 (figure 5) dans l'image tridimensionnelle 77, une étape c) d'identification, dans la zone d'intérêt, d'au moins un pneu libre 76 parmi l'ensemble de pneus 12, et d'obtention de données de position du pneu libre 76 dans le repère local (O, X, Y, Z), et une étape d) de commande du robot 30 en utilisant les données de position. Dans une étape e) le pneu libre 76 est déplacé par le robot 30 à l'écart des autres des pneus de l'ensemble de pneus 12.

A l'étape a), le système de commande et de traitement 42 pilote le capteur 22 et reçoit des données formant l'image tridimensionnelle 77. En pratique, par exemple huit images tridimensionnelles sont prises par le capteur 22. Le temps d'acquisition total est par exemple d'environ 500 millisecondes.

A l'étape b), la zone d'intérêt 104 est par exemple déterminée à partir de la forme et de la position active connues du premier rack 14, en ne conservant que les données relatives à des points de la surface S situé dans un logement 106 défini par le premier rack 14. En pratique, par exemple, on ne conserve que des points situés dans un parallélépipède ayant des coordonnées x situées dans un certain intervalle selon la direction de rangement X, des coordonnées y situées dans un certain intervalle selon la direction transversale Y, et des coordonnées z situées dans certain intervalle selon la direction de superposition Z.

En variante d'autres formes de la zone d'intérêt 104 sont possibles selon la forme du support 16 ou de l'empilement de pneus 12 connues d'avance. D'autres méthodes d'obtention de la zone d'intérêt 104 sont possibles, par exemple itératives, ou utilisant des balises (non représentées) présentes sur le support 16.

L'étape b) permet de fiabiliser la recherche des pneus 12 les plus hauts.

Selon l'invention, à Al'étape c), un seuillage de la zone d'intérêt 104 est réalisé dans une la direction de seuillage Z1 pour obtenir une tranche 108 (figure 5) de la zone d'intérêt (104), la tranche comprenant la rangée supérieure 74 parmi les rangées de pneus 64 selon la direction de superposition Z. Ensuite, selon l'invention, une analyse de la tranche 108 est effectuée pour identifier le pneu libre 76.

Avantageusement, un ajustement de la distance entre le support 16 et le capteur 22 est effectué de manière à ce que la tranche 108 s'étende sur des distances du capteur comprises entre 1,5 m et 2,5 m, de préférence entre 1,8 m et 2,2 m, dans la direction de seuillage Z1. En effet, ceci conditionne la qualité des images tridimensionnelles 77, donc le nombre d'images tridimensionnelles qui sont prises, et donc la durée des étapes a) à c).

Selon un mode particulier, l'étape a) est recommencée après l'ajustement.

La plage de distance entre 1,5 m et 2,5 m a permis d'obtenir un temps d'acquisition de 533 ms à l'étape a), avec une moyenne par exemple réalisée par le capteur 22 sur huit acquisitions. L'augmentation de la plage de distance augmente le temps d'acquisition à, par exemple, 1 seconde, avec seize acquisitions.

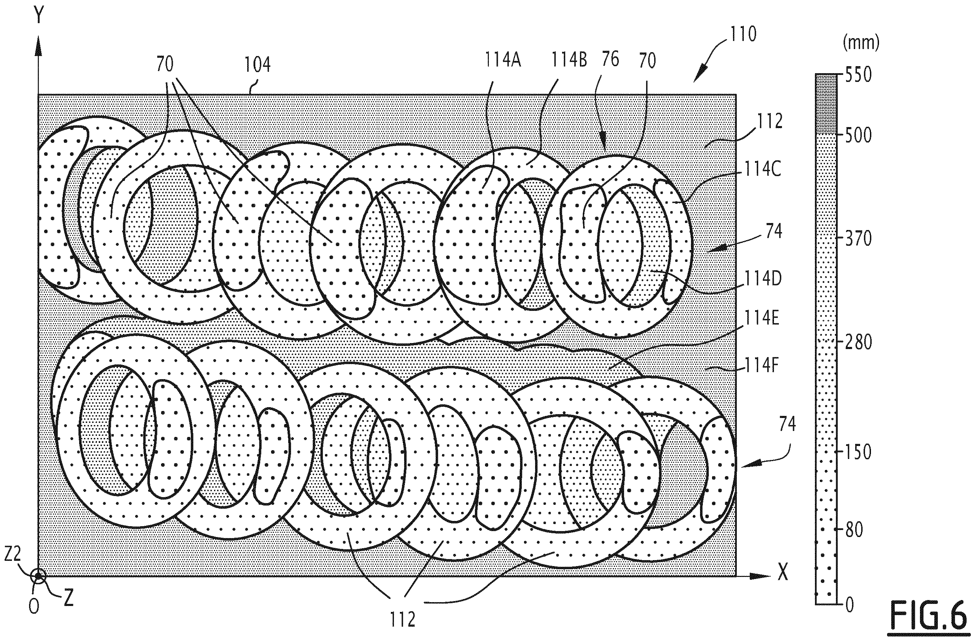

Selon l'invention, l'analyse de la tranche 108 comprend une obtention d'une image bidimensionnelle de la tranche, analogue à l'image bidimensionnelle 110 représentée sur la figure 6. L'image bidimensionnelle 110 a une pluralité de pixels 112, chaque pixel ayant une valeur représentative d'une distance dans une direction d'analyse Z2 entre le capteur 22 et des pneus de la rangée supérieure 74.

Dans l'exemple de la figure 6, la direction d'analyse Z2 est la direction de superposition Z, et l'image bidimensionnelle 110 comprend deux rangées supérieures 74. Dans ces deux rangées supérieures 74, les pneus 12 présentent des inclinaisons en sens opposés par rapport à la direction de superposition Z, contrairement aux pneus 12 représentés sur la figure 1. L'image bidimensionnelle 110 représentée sur la figure 6 a été simplifiée pour rester lisible. Elle comprend six types de zones 114A, 114B, 114C, 114D, 114E, 114F correspondant à six gammes de distances entre le capteur 22 et la surface S selon la direction d'analyse Z2. Plus les points remplissant les zones sont rapprochés, plus la surface S est éloignée du capteur 22. En réalité, les pixels 112 des images bidimensionnelles 110 ont par exemple des niveaux de gris correspondant à plus de six zones.

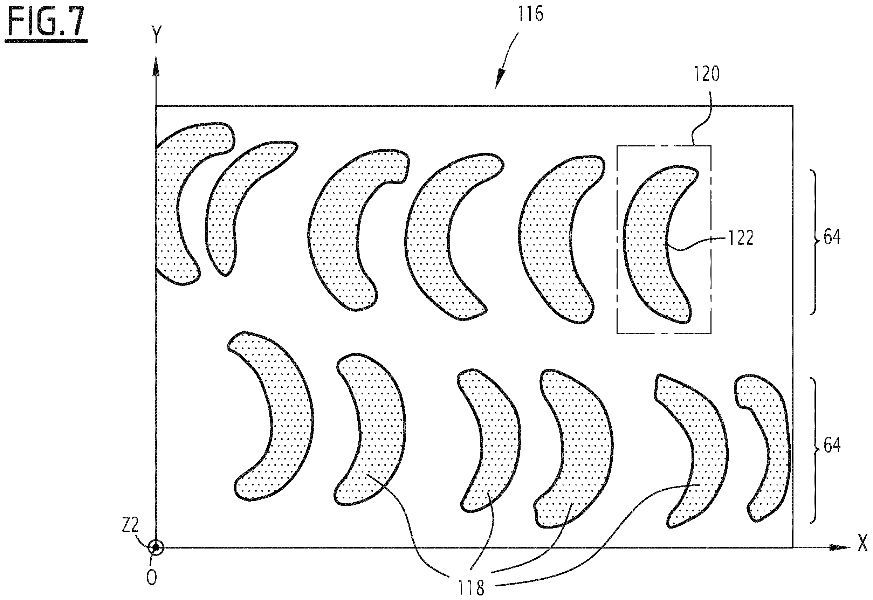

Selon l'invention, l'analyse de la tranche 108 comprend par exemple une analyse de particules (en anglais « *blob analysis* ») de l'image bidimensionnelle 110 pour obtenir une image traitée 116 (figure 7) comportant des particules 118 disjointes ayant des formes correspondant aux parties supérieures 70 des pneus 12 présents dans les rangées supérieures 74. Selon l'invention, l'analyse de la tranche 108 comprend enfin la sélection d'une des particules 118, la particule sélectionnée 120 ayant une forme correspondant à la partie supérieure 70 du pneu libre 76.

L'analyse de particules associe des pixels de l'image bidimensionnelle 110 par voisinage et permet d'obtenir en sortie des objets labellisés, les particules 118.

L'analyse de la tranche 108 comprend avantageusement une obtention de paramètres de position représentatifs de positions respectives des particules 118 dans l'image traitée 116 et de paramètres d'orientation représentatifs d'orientations respectives des particules dans l'image traitée, la sélection d'une des particules utilisant au moins certains des paramètres de position et certains des paramètres d'orientation.

Selon un mode de réalisation particulier, au moins certains des paramètres d'orientation sont obtenus par une analyse de la convexité ou de la concavité d'un bord 122 des particules 118.

A chacune des particules 118 est avantageusement associée une « carte d'identité » comprenant par exemple la surface, la position dans les deux axes X, Y de l'image bidimensionnelle, et des caractéristiques de forme (concave, convexe...).

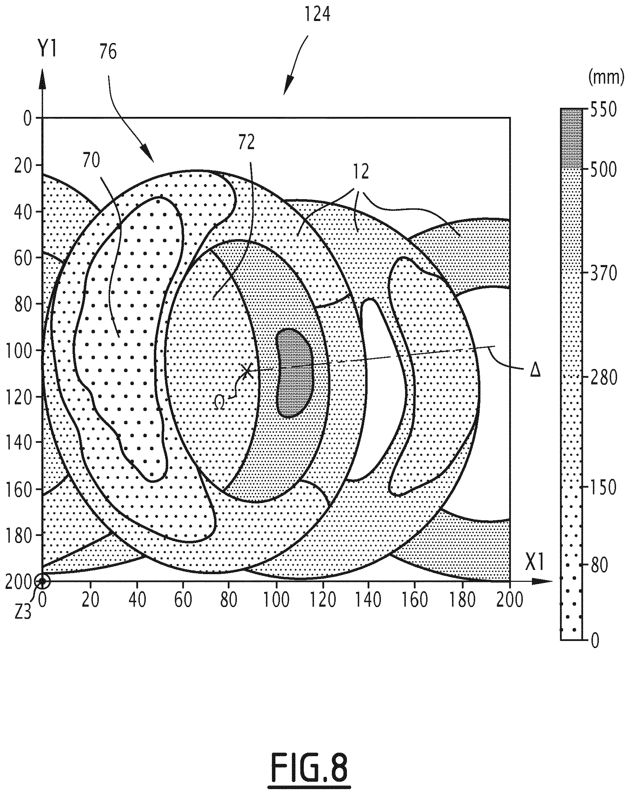

Toujours à l'étape c), l'obtention de données de position représentatives de la position du pneu libre 76 comprend par exemple une génération itérative, à partir d'au moins une partie de l'image tridimensionnelle 77, d'images bidimensionnelles 124 successives (dont l'une est représentée sur la figure 8) du pneu libre 76 selon des directions de visée Z3 résultant de rotations successives dans le repère local (O, X, Y, Z), et une identification du pneu libre 76 comme ayant une forme sensiblement circulaire dans l'une des images bidimensionnelles 124, et la sélection de la direction de visée Z3 de cette image bidimensionnelle. Ensuite, à partir de la direction de visée sélectionnée Z3, les deux paramètres α1, α2 représentatifs de l'orientation du pneu libre 76 dans le repère local (O, X, Y, Z) sont obtenus.

Sur l'image bidimensionnelle 124 représentée sur la figure 8, la direction de visée Z3 est la direction d'analyse Z2, c'est-à-dire la direction de superposition Z dans l'exemple. Aussi, le pneu libre 76 présente une forme elliptique sur l'image bidimensionnelle 124. La génération itérative fait varier la direction de visée Z3 jusqu'à ce que la direction de visée soit sensiblement parallèle à l'axe Δ du pneu libre 76, de sorte que, dans l'image bidimensionnelle 124 correspondante, le pneu libre 76 présente une forme sensiblement circulaire. En particulier, le logement central 72 du pneu libre 76 apparaît comme sensiblement circulaire.

A partir de la direction de visée Z3 et de la dernière image bidimensionnelle 124 générée, on calcule facilement les données de position du pneu libre 76, par exemple, les coordonnées X0, Y0, Z0 du centre Ω du pneu libre et deux angles α1, α2 par rapport au repère local (O, X, Y, Z).

Selon des variantes du procédé, le flanc 94 du pneu est utilisé pour déterminer la position du pneu libre, car le flanc fournit une surface optiquement stable.

D'autres modes d'obtention de la position et de l'orientation du pneu libre 76 sont possibles. Par exemple, il serait possible de rechercher non pas une forme circulaire dans la série d'images bidimensionnelle 124, mais directement une forme elliptique dans l'image tridimensionnelle 77 au voisinage du pneu libre 76.

A l'étape d), le système de commande et de traitement 42 pilote le robot 30 en fonction des données de position du pneu libre 76.

Les instructions logicielles pour le traitement des données 3D (images tridimensionnelles 77) et les échanges de données avec le robot 30 sont exemple élaborées en utilisant la plate-forme de développement logiciel « LabVIEW » de National Instruments. En association avec cette plate-forme, la bibliothèque de traitement d'image *"Vision development module"* (VDM) permet avantageusement de réaliser les sous-étapes de seuillage et d'analyse de particules.

A l'étape e), le robot 30 saisit le pneu libre 76 grâce au préhenseur 82. Le préhenseur 82 selon l'invention est particulièrement bien adapté pour saisir rapidement et efficacement un pneu.

Avantageusement, pendant que le robot 30 déplace le pneu libre 76, le système de commande et de traitement 42 réalise les étapes a) à c) à nouveau pour déterminer le prochain pneu libre et obtenir ses données de position. Dit autrement, les étapes d) et e) et les étapes a) à c) sont également réalisées au moins en partie en temps masqué. Par exemple, le robot 30 déplace un pneu en 5 à 6 secondes, ce qui laisse une fenêtre temporelle pour réaliser les mesures par le capteur 22 et les calculs pour déterminer le prochain pneu libre.

Grâce aux caractéristiques décrites ci-dessus, les étapes a) à e) pour désempiler l'ensemble de pneus 12 sont entièrement automatisées. Le procédé est plus rapide et/ou moins coûteux que les procédés actuellement utilisés.

Le procédé permet avantageusement de décharger un camion contenant 1000 pneus en moins d'une heure, soit un pneu toutes les 3 secondes environ. Par exemple, il est envisageable d'installer un robot à deux bras travaillant alternativement, chaque bras réalisant un cycle en 6 secondes, pour un dépilement de pneu toutes les 3 secondes.

## Revendications

1. Procédé pour désempiler un ensemble de pneus (12) empilés sur un support (16) dans une direction de superposition (Z), l'ensemble de pneus (12) comprenant des rangées de pneus (64) superposées dans la direction de superposition (Z) et s'étendant dans une direction de rangement (X) sensiblement perpendiculaire à la direction de superposition (Z), les pneus (12) de chacune des rangées de pneus (64) étant disposés flanc contre flanc obliquement par rapport à la direction de superposition (Z), chacun des pneus (12) ayant une partie supérieure (70) et définissant un logement central (72), le procédé comprenant les étapes suivantes :
a) obtention d'au moins une image tridimensionnelle (77) à l'aide d'au moins un capteur (22) tridimensionnel à temps de vol dirigé vers l'ensemble de pneus (12), l'image tridimensionnelle (77) étant représentative d'une surface extérieure (S) d'au moins une partie de l'ensemble de pneus (12) dans un repère local (O, X, Y, Z) lié au support (16) ;
b) détermination d'une zone d'intérêt (104) dans l'image tridimensionnelle (77) ;
c) identification, dans la zone d'intérêt (104), d'au moins un pneu libre (76) parmi l'ensemble de pneus (12), le pneu libre (76) étant adapté pour être soulevé dans la direction de superposition (Z) par rapport au support (16) sans déplacer les autres des pneus de l'ensemble de pneus (12), et obtention de données de position (X0, Y0, Z0, α1, α2) représentatives de la position du pneu libre (76) dans le repère local (O, X, Y, Z) ;
d) commande d'un robot (30) en utilisant les données de position (X0, Y0, Z0, α1, α2) ; et
e) déplacement du pneu libre (76) par le robot (30) à l'écart des autres pneus de l'ensemble de pneus (12), **caractérisé en ce que**
l'étape d'identification comprend:
- un seuillage de la zone d'intérêt (104) dans une direction de seuillage (Z1) pour obtenir une tranche (108) de la zone d'intérêt (104), la tranche (108) comprenant une rangée supérieure (74) parmi les rangées de pneus (64) selon la direction de superposition (Z), et
- une analyse de la tranche (108) pour identifier ledit pneu libre (76),
l'analyse de la tranche (108) comprenant :
- une obtention, à partir de la tranche (108), d'une image bidimensionnelle (110) ayant une pluralité de pixels (112), chaque pixel de la pluralité ayant une valeur représentative d'une distance dans une direction d'analyse (Z2) entre le capteur (22) et des pneus (12) de la rangée supérieure (74),
- une analyse de particule de l'image bidimensionnelle (110) pour obtenir une image traitée (116) comportant des particules (118) disjointes ayant des formes correspondant aux parties supérieures des pneus présents dans la rangée supérieure (74), et
- la sélection d'une des particules (118), la particule sélectionnée (120) ayant une forme
correspondant à la partie supérieure (70) du pneu libre (76).

2. Procédé selon la revendication 1, comprenant un ajustement d'une distance entre le support (16) et le capteur (22) de manière à ce que, pendant l'obtention de l'image tridimensionnelle (77), la tranche (108) s'étende sur des distances du capteur (22) comprises entre 1,5 m et 2,5 m, de préférence entre 1,8 m et 2,2 m, dans la direction de seuillage (Z1).

3. Procédé selon la revendication 1 ou 2, dans lequel l'analyse de la tranche (108) comprend en outre une obtention de paramètres de position représentatifs de positions respectives des particules (118) dans l'image traitée (116) et de paramètres d'orientation représentatifs d'orientations respectives des particules (118) dans l'image traitée (116), la sélection d'une des particules (118) utilisant au moins certains des paramètres de position et certains des paramètres d'orientation.

4. Procédé selon la revendication 3, dans lequel au moins certains des paramètres d'orientation sont obtenus par une analyse de la convexité ou de la concavité d'un bord (122) des particules (118).

5. Procédé selon l'une quelconque des revendications 1 à 4, dans lequel l'obtention des données de position (X0, Y0, Z0, α1, α2) représentatives de la position du pneu libre (76) comprend :
- une génération itérative, à partir d'au moins une partie de l'image tridimensionnelle (77), d'images bidimensionnelles (124) successives du pneu libre (76) selon des directions de visée (Z3) résultant de rotations successives dans le repère local (O, X, Y, Z) ;
- une identification du pneu libre (76) comme ayant une forme sensiblement circulaire dans l'une des images bidimensionnelles (124), et une sélection de la direction de visée (Z3) de cette image bidimensionnelle (124) ; et
- une obtention, à partir de la direction de visée sélectionnée, d'au moins deux paramètres (α1, α2) représentatifs d'une orientation du pneu libre (76) dans le repère local (O, X, Y, Z).

6. Procédé selon l'une quelconque des revendications 1 à 5, dans lequel le robot (30) comprend un bras articulé (80), et un préhenseur (82) adapté pour saisir le pneu libre (76), le préhenseur (82) comprenant :
- un corps (86) monté sur le bras articulé (80) ; et
- au moins deux mâchoires (88, 90) montées sur le corps (86), les mâchoires (88, 90) étant mobiles l'une par rapport à l'autre entre une position ouverte, dans laquelle les deux mâchoires (88, 90) sont à l'écart l'une de l'autre, et une position fermée, dans laquelle les deux mâchoires (88, 90) sont adaptées pour pincer un flanc (94) du pneu libre (76).

7. Procédé selon la revendication 6, dans lequel chacune des deux mâchoires (88, 90) comprend un embout (95, 96) formant une portion angulaire de tore.

8. Procédé selon la revendication 6 ou 7, dans lequel :
- le corps (86) est monté rotatif sur le bras articulé (80) autour d'un axe de rotation (D) ;
- l'une des deux mâchoires (88, 90) est fixe par rapport au corps (86) et fait saille du corps (86) selon un premier axe (D1) formant un angle (α) avec l'axe de rotation (D), l'angle (α) étant compris entre 70° et 110° ; et
- l'autre des deux mâchoires (88, 90) est montée rotative sur le corps (86) autour d'une deuxième axe (D2) sensiblement orthogonal à l'axe de rotation (D).

9. Installation (10) pour désempiler un ensemble de pneus (12) empilés sur un support (16) dans une direction de superposition (Z), l'ensemble de pneus (12) comprenant des rangées de pneus (64) superposées dans la direction de superposition (Z) et s'étendant dans une direction de rangement (X) sensiblement perpendiculaire à la direction de superposition (Z), les pneus (12) de chacune des rangées de pneus (64) étant disposés flanc contre flanc obliquement par rapport à la direction de superposition (Z), chacun des pneus (12) ayant une partie supérieure (70) et définissant un logement central (72), l'installation 10 comprenant :
- au moins un capteur (22) tridimensionnel à temps de vol dirigé vers l'ensemble de pneus (12) et configuré pour fournir au moins une image tridimensionnelle (77) représentative d'une surface extérieure (S) d'au moins une partie de l'ensemble de pneus (12) dans un repère local (O, X, Y, Z) lié au support (16) ;
- un système de commande et de traitement (42) configuré pour réaliser :
- une détermination d'une zone d'intérêt (104) dans l'image tridimensionnelle (77), et
- une identification, dans la zone d'intérêt (104), d'au moins un pneu libre (76) parmi l'ensemble de pneus (12), le pneu libre (76) étant adapté pour être soulevé dans la direction de superposition (Z) par rapport au support (16) sans déplacer les autres des pneus de l'ensemble de pneus (12), et une obtention de données de position (X0, Y0, Z0, α1, α2) représentatives de la position du pneu libre (76) dans le repère local (O, X, Y, Z) ; et
- un robot (30) adapté pour déplacer le pneu libre (76) à l'écart des autres pneus de l'ensemble de pneus (12), le système de commande et de traitement (42) étant adapté pour commander le robot (30) en utilisant les données de position (X0, Y0, Z0, α1, α2), **caractérisé en ce que** l'étape d'identification comprend:
- un seuillage de la zone d'intérêt (104) dans une direction de seuillage (Z1) pour obtenir une tranche (108) de la zone d'intérêt (104), la tranche (108) comprenant une rangée supérieure (74) parmi les rangées de pneus (64) selon la direction de superposition (Z), et
- une analyse de la tranche (108) pour identifier ledit pneu libre (76),
l'analyse de la tranche (108) comprenant :
- une obtention, à partir de la tranche (108), d'une image bidimensionnelle (110) ayant une pluralité de pixels (112), chaque pixel de la pluralité ayant une valeur représentative d'une distance dans une direction d'analyse (Z2) entre le capteur (22) et des pneus (12) de la rangée supérieure (74),
- une analyse de particule de l'image bidimensionnelle (110) pour obtenir une image traitée (116) comportant des particules (118) disjointes ayant des formes correspondant aux parties supérieures des pneus présents dans la rangée supérieure (74), et
- la sélection d'une des particules (118), la particule sélectionnée (120) ayant une forme
correspondant à la partie supérieure (70) du pneu libre (76).

## Patentansprüche

1. Verfahren zum Entstapeln einer Anordnung von Reifen (12), die auf einem Träger (16) in einer Überlagerungsrichtung (Z) gestapelt sind, die Anordnung von Reifen (12) umfassend Reihen von Reifen (64) umfasst, die in der Überlagerungsrichtung (Z) übereinander liegen und sich in einer Ordnungsrichtung (X) im Wesentlichen senkrecht zu der Überlagerungsrichtung (Z) erstrecken, wobei die Reifen (12) jeder der Reihen von Reifen (64) Flanke an Flanke schräg zu der Überlagerungsrichtung (Z) angeordnet sind, wobei jeder der Reifen (12) einen oberen Abschnitt (70) aufweist und eine mittlere Aufnahme (72) definiert, das Verfahren umfassend die folgenden Schritte:
a) Erlangen mindestens eines dreidimensionalen Bilds (77) mittels mindestens eines dreidimensionalen Laufzeitsensors (22), der auf die Anordnung von Reifen (12) gerichtet ist, wobei das dreidimensionale Bild (77) repräsentativ für eine Außenfläche (S) mindestens eines Teils der Anordnung von Reifen (12) in einem lokalen Koordinatensystem (O, X, Y, Z) ist, das mit dem Träger (16) verbunden ist;
b) Bestimmen eines Bereichs von Interesse (104) in dem dreidimensionalen Bild (77);
c) Identifizieren mindestens eines freien Reifens (76) aus dem Anordnung von Reifen (12) in dem Bereich von Interesse (104), wobei der freie Reifen (76) geeignet ist, um in der Überlagerungsrichtung (Z) in Bezug auf den Träger (16) angehoben zu werden, ohne die anderen der Reifen der Anordnung von Reifen (12) zu bewegen, und Erlangen von Positionsdaten (X0, Y0, Z0, α1, α2), die repräsentativ für die Position des freien Reifens (76) in dem lokalen Koordinatensystem (O, X, Y, Z) sind;
d) Steuern eines Roboters (30) unter Verwendung der Positionsdaten (X0, Y0, Z0, α1, α2); und
e) Bewegen des freien Reifens (76) durch den Roboter (30) weg von den anderen Reifen der Anordnung von Reifen (12),
**dadurch gekennzeichnet, dass** der Identifizierungsschritt Folgendes umfasst:
- Schwellenwertbildung des Bereichs von Interesse (104) in einer Schwellenwertrichtung (Z1), um einen Teilabschnitt (108) des Bereichs von Interesse (104) zu erlangen, der Teilabschnitt (108) umfassend eine obere Reihe (74) unter den Reihen von Reifen (64) entlang der Überlagerungsrichtung (Z), und - Analyse des Teilabschnitts (108), um den freien Reifen (76) zu identifizieren, die Analyse des Teilabschnitts (108) umfassend:
- Erlangung, anhand des Teilabschnitts (108), eines zweidimensionalen Bilds (110), das eine Vielzahl von Pixeln (112) aufweist, wobei jedes Pixel der Vielzahl einen Wert aufweist, der repräsentativ für einen Abstand in einer Analyserichtung (Z2) zwischen dem Sensor (22) und Reifen (12) der oberen Reihe (74) ist,
- Partikelanalyse des zweidimensionalen Bilds (110), um ein verarbeitetes Bild (116) mit disjunkten Partikeln (118) zu erlangen, die Formen aufweisen, die den oberen Teilen der Reifen entsprechen, die in der oberen Reihe (74) vorhanden sind, und
- Auswahl eines der Partikel (118), wobei das ausgewählte Partikel (120) eine Form aufweist,
die dem oberen Teil (70) des freien Reifens (76) entspricht.

2. Verfahren nach Anspruch 1, wobei ein Abstand zwischen dem Träger (16) und dem Sensor (22) eingestellt wird, sodass sich der Teilabschnitt (108) beim Erlangen des dreidimensionalen Bilds (77) über Abstände vom Sensor (22) zwischen 1,5 m und 2,5 m, vorzugsweise zwischen 1,8 m und 2,2 m, in der Schwellenwertrichtung (Z1) erstreckt.

3. Verfahren nach Anspruch 1 oder 2, wobei die Analyse des Teilabschnitts (108) ferner ein Erlangen von Positionsparametern, die repräsentativ für jeweilige Positionen der Partikel (118) in dem verarbeiteten Bild (116) sind, und von Ausrichtungsparametern, die repräsentativ für jeweilige Ausrichtungen der Partikel (118) in dem verarbeiteten Bild (116) sind, umfasst, wobei die Auswahl eines der Partikel (118) zumindest einige der Positionsparameter und einige der Ausrichtungsparameter verwendet.

4. Verfahren nach Anspruch 3, wobei mindestens einige der Ausrichtungsparameter durch eine Analyse der Konvexität oder Konkavität eines Rands (122) der Partikel (118) erlangt werden.

5. Verfahren nach einem der Ansprüche 1 bis 4, wobei das Erlangen von Positionsdaten (X0, Y0, Z0, α1, α2), die repräsentativ für die Position des freien Reifens (76) sind, Folgendes umfasst:
- iterative Erzeugung, anhand mindestens eines Teils des dreidimensionalen Bilds (77), von aufeinanderfolgenden zweidimensionalen Bildern (124) des freien Reifens (76) gemäß Blickrichtungen (Z3), die aus aufeinanderfolgenden Drehungen in dem lokalen Koordinatensystem (O, X, Y, Z) resultieren;
- Identifizieren des freien Reifens (76) als im Wesentlichen kreisförmig in einem der zweidimensionalen Bilder (124) und Auswählen der Blickrichtung (Z3) dieses zweidimensionalen Bilds (124); und
- Erlangen, anhand der ausgewählten Blickrichtung, von mindestens zwei Parametern (α1, α2), die repräsentativ für eine Ausrichtung des freien Reifens (76) in dem lokalen Koordinatensystem (O, X, Y, Z) sind.

6. Verfahren nach einem der Ansprüche 1 bis 5, wobei der Roboter (30) einen Gelenkarm (80) und einen Greifer (82) umfasst, der angepasst ist, um den freien Reifen (76) zu greifen, der Greifer (82) umfassend:
- einen Körper (86), der an dem Gelenkarm (80) montiert ist; und
- mindestens zwei Backen (88, 90), die an dem Körper (86) montiert sind, wobei die Backen (88, 90) in Bezug aufeinander zwischen einer offenen Position, in der die beiden Backen (88, 90) voneinander beabstandet sind, und einer geschlossenen Position, in der die zwei Backen (88, 90) angepasst sind, um eine Seitenwand (94) des losen Reifens (76) einzuklemmen, bewegbar sind.

7. Verfahren nach Anspruch 6, wobei jede der zwei Backen (88, 90) ein Endstück (95, 96) umfasst, das einen torusförmigen Winkelabschnitt bildet.

8. Verfahren nach Anspruch 6 oder 7, wobei:
- der Körper (86) drehbar um eine Drehachse (D) an dem Gelenkarm (80) montiert ist;
- eine der zwei Backen (88, 90) in Bezug auf den Körper (86) feststehend ist und von dem Körper (86) entlang einer ersten Achse (D1) hervorsteht, die mit der Drehachse (D) einen Winkel (α) bildet, wobei der Winkel (α) zwischen 70° und 110° ist; und
- die andere der zwei Backen (88, 90) drehbar um eine zweite Achse (D2), die im Wesentlichen orthogonal zu der Drehachse (D) ist, an dem Körper (86) montiert ist.

9. Anlage (10) zum Entstapeln einer Anordnung von Reifen (12), die auf einem Träger (16) in einer Überlagerungsrichtung (Z) gestapelt sind, die Anordnung von Reifen (12) umfassend Reihen von Reifen (64) umfasst, die in der Überlagerungsrichtung (Z) übereinander liegen und sich in einer Ordnungsrichtung (X) im Wesentlichen senkrecht zu der Überlagerungsrichtung (Z) erstrecken, wobei die Reifen (12) jeder der Reihen von Reifen (64) Flanke an Flanke schräg zu der Überlagerungsrichtung (Z) angeordnet sind, wobei jeder der Reifen (12) einen oberen Abschnitt (70) aufweist und eine mittlere Aufnahme (72) definiert, die Anlage 10 umfassend:
- mindestens einen dreidimensionalen Laufzeitsensor (22), der auf die Anordnung von Reifen (12) gerichtet und konfiguriert ist, um mindestens ein dreidimensionales Bild (77) bereitzustellen, das repräsentativ für eine Außenfläche (S) mindestens eines Teils der Anordnung von Reifen (12) in einem lokalen Koordinatensystem (O, X, Y, Z) ist, das mit dem Träger (16) verbunden ist;
- ein Steuer- und Verarbeitungssystem (42), das zu Folgendem konfiguriert ist:
- Bestimmen eines Bereichs von Interesse (104) in dem dreidimensionalen Bild (77), und
- Identifizieren mindestens eines freien Reifens (76) aus dem Anordnung von Reifen (12) in dem Bereich von Interesse (104), wobei der freie Reifen (76) geeignet ist, um in der Überlagerungsrichtung (Z) in Bezug auf den Träger (16) angehoben zu werden, ohne die anderen der Reifen der Anordnung von Reifen (12) zu bewegen, und Erlangen von Positionsdaten (X0, Y0, Z0, α1, α2), die repräsentativ für die Position des freien Reifens (76) in dem lokalen Koordinatensystem (O, X, Y, Z) sind; und
- einen Roboter (30), der angepasst ist, um den freien Reifen (76) von den anderen Reifen der Anordnung von Reifen (12) wegzubewegen, wobei das Steuer- und Verarbeitungssystem (42) angepasst ist, um den Roboter (30) unter Verwendung der Positionsdaten (X0, Y0, Z0, α1, α2) zu steuern,
**dadurch gekennzeichnet, dass** der Identifizierungsschritt Folgendes umfasst:
- Schwellenwertbildung des Bereichs von Interesse (104) in einer Schwellenwertrichtung (Z1), um einen Teilabschnitt (108) des Bereichs von Interesse (104) zu erlangen, der Teilabschnitt (108) umfassend eine obere Reihe (74) unter den Reihen von Reifen (64) entlang der Überlagerungsrichtung (Z), und - Analyse des Teilabschnitts (108), um den freien Reifen (76) zu identifizieren,
die Analyse des Teilabschnitts (108) umfassend:
- Erlangung, anhand des Teilabschnitts (108), eines zweidimensionalen Bilds (110), das eine Vielzahl von Pixeln (112) aufweist, wobei jedes Pixel der Vielzahl einen Wert aufweist, der repräsentativ für einen Abstand in einer Analyserichtung (Z2) zwischen dem Sensor (22) und Reifen (12) der oberen Reihe (74) ist,
- Partikelanalyse des zweidimensionalen Bilds (110), um ein verarbeitetes Bild (116) mit disjunkten Partikeln (118) zu erlangen, die Formen aufweisen, die den oberen Teilen der Reifen entsprechen, die in der oberen Reihe (74) vorhanden sind, und
- Auswahl eines der Partikel (118), wobei das ausgewählte Partikel (120) eine Form aufweist,
die dem oberen Teil (70) des freien Reifens (76) entspricht.

## Claims

1. A method for unstacking a set of tyres (12) stacked on a support (16) in a direction of superposition (Z), the set of tyres (12) comprising rows of tyres (64) superimposed in the direction of superposition (Z) and extending in a direction of storage (X) substantially perpendicular to the direction of superposition (Z), the tyres (12) of each of the rows of tyres (64) being arranged side-by-side obliquely with respect to the direction of superposition (Z), each of the tyres (12) having an upper part (70) and defining a central housing (72), the method comprising the following steps:
a) obtaining at least one three-dimensional image (77) by means of at least one three-dimensional time-of-flight sensor (22) directed towards the set of tyres (12), the three-dimensional image (77) being representative of an external surface (S) of at least part of the set of tyres (12) in a local reference frame (O, X, Y, Z) linked to the support (16);
b) determining an area of interest (104) within the three-dimensional image (77);
c) identifying, within the region of interest (104), at least one free tyre (76) from the set of tyres (12), the free tyre (76) being adapted to be lifted in the direction of superposition (Z) relative to the support (16) without moving the other tyres in the set of tyres (12), and obtaining position data (X0, Y0, Z0, α1, α2) representative of the position of the free tyre (76) within the local reference frame (O, X, Y, Z);
d) controlling a robot (30) using the position data (X0, Y0, Z0, α1, α2); and
e) moving the free tyre (76), by the robot (30), away from the other tyres in the set of tyres (12),
**characterised in that** the step of identifying comprises:
- thresholding the area of interest (104) in a direction of thresholding (Z1) to obtain a slice (108) of the area of interest (104), the slice (108) comprising a top row (74) from among the rows of tyres in the direction of superposition (Z), and - analysing the slice (108) to identify said free tyre (76), the analysis of the slice (108) comprising:
- obtaining, from the slice (108), a two-dimensional image (110) having a plurality of pixels (112), each pixel of the plurality having a value representative of a distance, in a direction of analysis (Z2), between the sensor (22) and the tyres (12) in the top row (74),
- analysing the particles of the two-dimensional image (110) to obtain a processed image (116) comprising disjointed particles (118) having shapes corresponding to the upper parts of the tyres present in the top row (74), and
- selecting one of the particles (118), the selected particle (120) having a shape
corresponding to the upper part (70) of the free tyre (76).

2. The method according to claim 1, comprising adjusting a distance between the support (16) and the sensor (22) so that, during the obtaining of the three-dimensional image (77), the slice (108) extends over distances from the sensor (22) of between 1.5 m and 2.5 m, preferably between 1.8 m and 2.2 m, in the direction of thresholding (Z1).

3. The method according to claim 1 or 2, wherein the analysis of the slice (108) further comprises obtaining position parameters representative of respective positions of the particles (118) in the processed image (116) and orientation parameters representative of respective orientations of the particles (118) in the processed image (116), the selection of one of the particles (118) using at least some of the position parameters and some of the orientation parameters.

4. The method according to claim 3, wherein at least some of the orientation parameters are obtained by an analysis of the convexity or concavity of an edge (122) of the particles (118).

5. The method according to any one of claims 1 to 4, wherein obtaining position data (X0, Y0, Z0, α1, α2) representative of the position of the free tyre (76) comprises:
- iterative generation, from at least part of the three-dimensional image (77), of successive two-dimensional images (124) of the free tyre (76) in viewing directions (Z3) resulting from successive rotations in the local reference frame (O, X, Y, Z);
- identifying the free tyre (76) as having a substantially circular shape in one of the two-dimensional images (124), and selecting the viewing direction (Z3) of that two-dimensional image (124); and
- obtaining, from the selected viewing direction, at least two parameters (α1, α2) representative of an orientation of the free tyre (76) in the local reference frame (O, X, Y, Z).

6. The method according to any one of claims 1 to 5, wherein the robot (30) comprises an articulated arm (80), and a gripper (82) adapted to grasp the loose tyre (76), the gripper (82) comprising:
- a body (86) mounted on the articulated arm (80); and
- at least two jaws (88, 90) mounted on the body (86), the jaws (88, 90) being movable relative to each other between an open position, in which the two jaws (88, 90) are spaced apart from each other, and a closed position, in which the two jaws (88, 90) are adapted to clamp a sidewall (94) of the tyre.

7. The method according to claim 6, wherein each one of the two jaws (88, 90) comprises a tip (95, 96) forming an angular portion of a torus.

8. The method according to claim 6 or 7, wherein:
- the body (86) is rotatably mounted on the articulated arm (80) about an axis of rotation (D);
- one of the two jaws (88, 90) is fixed relative to the body (86) and projects from the body (86) along a first axis (D1) forming an angle (a) with the axis of rotation (D), the angle (a) being between 70° and 110°; and
- the other of the two jaws (88, 90) is rotatably mounted on the body (86) about a second axis (D2) substantially orthogonal to the axis of rotation (D).

9. A facility (10) for unstacking a set of tyres (12) stacked on a support (16) in a direction of superposition (Z), the set of tyres (12) comprising rows of tyres (64) superimposed in the direction of superposition (Z) and extending in a direction of storage (X) substantially perpendicular to the direction of superposition (Z), the tyres (12) of each of the rows of tyres (64) being arranged side-by-side obliquely with respect to the direction of superposition (Z), each of the tyres (12) having an upper part (70) and defining a central housing (72), the facility (10) comprising:
- at least one three-dimensional time-of-flight sensor (22) directed towards the set of tyres (12) and configured to provide at least one three-dimensional image (77) representative of an external surface (S) of at least part of the set of tyres (12) in a local reference frame (O, X, Y, Z) linked to the support (16);
- a control and processing system (42) configured to:
- determine an area of interest (104) within the three-dimensional image (77), and
- identify, within the region of interest (104), at least one free tyre (76) from the set of tyres (12), the free tyre (76) being adapted to be lifted in the direction of superposition (Z) relative to the support (16) without moving the other tyres in the set of tyres (12), and obtain position data (X0, Y0, Z0, α1, α2) representative of the position of the free tyre (76) within the local reference frame (O, X, Y, Z); and
- a robot (30) adapted to move the free tyre (76) away from the other tyres in the set of tyres (12), the control and processing system (42) being adapted to control the robot (30) using the position data (X0, Y0, Z0, α1, α2),
**characterised in that** the step of identifying comprises:
- thresholding the area of interest (104) in a direction of thresholding (Z1) to obtain a slice (108) of the area of interest (104), the slice (108) comprising a top row (74) from among the rows of tyres in the direction of superposition (Z), and - analysing the slice (108) to identify said free tyre (76),
the analysis of the slice (108) comprising:
- obtaining, from the slice (108), a two-dimensional image (110) having a plurality of pixels (112), each pixel of the plurality having a value representative of a distance, in a direction of analysis (Z2), between the sensor (22) and the tyres (12) in the top row (74),
- analysing the particles of the two-dimensional image (110) to obtain a processed image (116) comprising disjointed particles (118) having shapes corresponding to the upper parts of the tyres present in the top row (74), and
- selecting one of the particles (118), the selected particle (120) having a shape
corresponding to the upper part (70) of the free tyre (76).
